# EUROPÄISCHE PATENTANMELDUNG

(11) **EP 3 744 412 A1**
(43) Veröffentlichungstag der Anmeldung: **02.12.2020**
(21) Anmeldenummer: 19177232.6
(22) Anmeldetag: 29.05.2019
(51) Int. Cl.: B01D 19/00

(54) **VORRICHTUNG ZUR REDUZIERUNG VON GASBLASEN IN FLÜSSIGKEITEN**

(71) Anmelder: Siemens Healthcare Diagnostics Products GmbH, 35041 Marburg (DE)
(72) Erfinder: Bernhard, Joachim, 61184 Karben (DE); Korn, Matthias, 56355 Nastaetten (DE)

(57) **Zusammenfassung**

Die Erfindung betrifft eine Vorrichtung zur Reduzierung von Gasblasen in einer Flüssigkeit für ein automatisches Analysegerät. Die Vorrichtung umfasst einen ersten Hohlbehälter (3) mit einem Hohlraum (4), wobei der Hohlraum (4) von einer Bodenplatte (5) und einer mit der Bodenplatte (5) verbundenen Wandung (6) begrenzt ist, wobei am höchsten Punkt der Wandung (6), der den größten Abstand von der Bodenplatte (5) aufweist, eine erste Öffnung (7) vorgesehen ist, wobei der Hohlbehälter oberhalb der Bodenplatte (5) einen Einlass (8) für einen ersten Flüssigkeitsstrom der Flüssigkeit und einen Auslass (9) für einen zweiten Flüssigkeitsstrom der Flüssigkeit in der Wandung (6) aufweist, wobei der Einlass (8) und der Auslass (9) in einem ersten Abstand (10) zueinander angeordnet sind.

## Beschreibung

Die Erfindung betrifft eine Vorrichtung zur Reduzierung von Gasblasen in einer Flüssigkeit für ein automatisches Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

In automatisch arbeitenden Analysatoren, die zur Untersuchung von biologischen Körperflüssigkeiten eingesetzt werden, werden beispielsweise die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette zur Entsorgung durch einen Abfallschacht in einen Abfallbehälter verbracht.

In automatischen Analysatoren werden dabei Flüssigkeiten häufig in Kleinstmengen transportiert. Diese geschieht z.B. durch motorisch verschiebbare Pipetten, wobei die Pipetten dabei mittels motorisch betriebener Pumpen betrieben werden. Üblicherweise wird die Pipette mitsamt der zu transportierenden, sich in der Pipette befindenden Flüssigkeit verschoben. Da die Verschiebung innerhalb möglichst kurzer Zeit stattfinden soll, um einen möglichst schnellen Betrieb des Analyzers zu ermöglichen, ist es vorteilhaft, die zu bewegenden Massen zu reduzieren. Da eine Pumpe häufig eine vergleichsweise hohe Masse aufweist, wird sie meist nicht mit der Pipette verschoben, sondern ortsnah ortsfest befestigt und mit einem Schlauch an der Pipette angeschlossen. Dabei übersteigt das Volumen der zu transportierenden Flüssigkeit üblicherweise nicht das Pipettiervolumen der Pipette, so dass Verschleppungen durch Rückstände an der Verbindungsstelle der Pipette und des Schlauchs vermieden werden. Die Pumpe erzeugt einen definierten Überdruck bei der Flüssigkeitsabgabe und einen definierten Unterdruck bei der Flüssigkeitsaufnahme. Der Schlauch, der auch ein Schlauchsystem umfassen kann, und die Pipette sind mit einer inkompressiblen Systemflüssigkeit gefüllt, die die durch die Pumpe vorgegebenen Druckverhältnisse bzw. Druckänderungen möglichst verlustarm an der Pipettenspitze abzubilden und dadurch eine hohe Pipettierpräzession zu ermöglichen.

Die Systemflüssigkeit wird auch zum Spülen der Pipettiersysteme verwendet. Dadurch findet ein regelmäßiger Austausch der Systemflüssigkeit statt und neue Systemflüssigkeit muss in entsprechender Menge bei Betrieb des Analyzers bereitgestellt werden.

Der Luft- bzw. Gasgehalt der Systemflüssigkeit ist im Allgemeinen druck- und temperaturabhängig und kann je nach Beschaffenheit der entsprechenden Versorgungsvorrichtung für die Systemflüssigkeit stark variieren. Wenn z.B. eine relativ kalte Flüssigkeit bereitgestellt wird, erwärmt sich diese typischerweise in einem internen Versogungstank im Analyzer und den entsprechenden Flüssigkeitsleitungen. In Folge der Erwärmung wird die Löslichkeit der Gase in der Flüssigkeit reduziert, was zu einem ausperlen von Gasblasen führt. Das ausgeperlte Gas bildet dabei Gasblasen in der Flüssigkeit. Einschlüsse von Luft- bzw. Gasblasen in der Systemflüssigkeit verringern deren Inkompressibilität signifikant, was sich letztlich negativ auf die Pipettierpräzession auswirkt und daher minimiert werden soll.

Bisher erfolgte die Entfernung der Gase bzw. der Gasblasen mittels aufwändiger technischer Einrichtungen. Zum Entfernen von Gasblasen werden dazu sogenannte "Debubbler" eingesetzt. In diesen Vorrichtungen werden die Gasblasen durch Anlegen eines Vakuums durch eine gasdurchlässige, jedoch flüssigkeitsundurchlässige Membran aus der Flüssigkeit gezogen. Zur Entfernung von Gasen aus der Flüssigkeit werden dazu sogenannte "Degasser" eingesetzt. Diese Vorrichtungen verwenden zur Erzeugung eines Unterdrucks typischerweise geregelte Vakuumpumpen. Solche Vakuumpumpensysteme weisen eine komplexe Sensorik und Auswertelogik auf.

Gemeinsam haben die Vorrichtungen aus dem Stand der Technik, dass sie vergleichsweise komplex und aufwändig aufgebaut sind und entsprechend einen hohen Wartungsaufwand haben und vergleichsweise hohe Ausfallwahrscheinlichkeiten aufweisen.

Es ist daher Aufgabe der Erfindung, eine verbesserte Vorrichtung zur Reduzierung von Gasblasen in einer Flüssigkeit für ein automatisches Analysegerät zur Verfügung zu stellen, welches zuverlässiger arbeitet und einen vereinfachten, unkomplizierteren Aufbau aufweist sowie einfach in bestehende Analyzersysteme integriert werden kann.

### Diese Aufgabe wird erfindungsgemäß durch die im Folgenden beschriebenen Gegenstände und Verfahren gelöst.

Es wurde gefunden, dass eine verbesserte Vorrichtung zur Reduzierung von Gasblasen in einer Flüssigkeit für ein automatisches Analysegerät erreicht werden kann, wenn die Vorrichtung einen ersten Hohlbehälter mit einem Hohlraum umfasst, wobei der Hohlraum von einer Bodenplatte und einer mit der Bodenplatte verbundenen Wandung begrenzt ist, wobei am höchsten Punkt der Wandung, der den größten Abstand von der Bodenplatte aufweist, eine erste Öffnung vorgesehen ist, wobei der Hohlbehälter oberhalb der Bodenplatte einen Einlass für einen ersten Flüssigkeitsstrom der Flüssigkeit und einen Auslass für einen zweiten Flüssigkeitsstrom der Flüssigkeit in der Wandung aufweist, wobei der Einlass und der Auslass in einem ersten Abstand zueinander angeordnet sind.

Dies hat den Vorteil, dass Gasblasen, die sich in der Flüssigkeit innerhalb des ersten Hohlbehälters befinden, nach oben entgegen der Gravitationskräfte der Erdanziehung aufsteigen und durch die erste Öffnung den ersten Hohlbehälter verlassen können. Die Vorrichtung wird dazu so zwischen ein Versorgungssystem für die Systemflüssigkeit und einem Pipettiersystem angeordnet, dass die Flüssigkeit zunächst durch den Einlass in den ersten Hohlbehälter strömt, den Hohlbehälter durchströmt und durch den Auslass den ersten Hohlbehälter wieder verlässt bevor die Flüssigkeit dann zu dem Pipettiersystem gelangt.

Weiter hat dies den Vorteil, dass die Vorrichtung zur Reduzierung von Gasblasen in einer Flüssigkeit für ein automatisches Analysegerät besonders einfach und zuverlässig ausgestaltet werden kann und dabei einfach in bestehende Analyzersysteme integrierbar ist, da die Vorrichtung passiv arbeitet und insbesondere keine Stromversorgung und/oder Steuervorrichtung benötigt.

Gegenstand der vorliegenden Erfindung ist insbesondere eine Vorrichtung zur Reduzierung von Gasblasen in einer Flüssigkeit für ein automatisches Analysegerät, die Vorrichtung umfassend einen ersten Hohlbehälter mit einem Hohlraum, wobei der Hohlraum von einer Bodenplatte und einer mit der Bodenplatte verbundenen Wandung begrenzt ist, wobei am höchsten Punkt der Wandung, der den größten Abstand von der Bodenplatte aufweist, eine erste Öffnung vorgesehen ist, wobei der Hohlbehälter oberhalb der Bodenplatte einen Einlass für einen ersten Flüssigkeitsstrom der Flüssigkeit und einen Auslass für einen zweiten Flüssigkeitsstrom der Flüssigkeit in der Wandung aufweist, wobei der Einlass und der Auslass in einem ersten Abstand zueinander angeordnet sind.

In einer bevorzugten Ausführung entspricht der erste Abstand wenigstens einem halben Durchmesser des ersten Hohlbehälters, bevorzugt dem gesamten Durchmesser. Dies hat den Vorteil, dass Flüssigkeit, die durch den Einlass in den ersten Hohlbehälter strömt und diesen wieder durch den Auslass verlässt eine besonders lange Strecke innerhalb des ersten Hohlbehälters zurücklegen muss und sich damit für längere Zeit in dem ersten Hohlbehälter aufhält. Dies bewirkt, dass besonders viele Gasblasen aus der Flüssigkeit nach oben durch die erste Öffnung den ersten Hohlbehälter und die Flüssigkeit verlassen können. Dies bewirkt eine besonders effektive und hohe Reduktion des Volumens von Gasblasen in der Flüssigkeit.

In einer weiteren bevorzugten Ausführung sind der Einlass und/oder der Auslass unmittelbar oberhalb der Bodenplatte angeordnet. Dies hat den Vorteil, dass Gasblasen, die nach oben aufgestiegen sind, nicht durch den Auslass wider in der Flüssigkeit das erste Hohlgefäß wieder verlassen können, da sie andernfalls in das Pipettiersystem gelangen würden.

In einer weiteren bevorzugten Ausführung ist die Wandung als kuppelförmige Wandung ausgestaltet und der Hohlraum kuppelförmig. Dies hat den Vorteil, dass aufsteigende Gasblasen an der Wandung besonders effektiv Richtung der ersten Öffnung aufsteigen können und es keine Ecken oder Kanten gibt, an denen sich Gasblasen fangen können.

In einer weiteren bevorzugten Ausführung ist die Bodenplatte als Scheibe, bevorzugt als elliptische, bevorzugt als Kreisscheibe ausgestaltet.

In einer weiteren bevorzugten Ausführung befindet sich an der ersten Öffnung ein sich nach oben, von der Bodenplatte entfernend ausdehnendes Steigrohr. Dies hat den Vorteil, dass sich über der ersten Öffnung eine entsprechend der Länge des Steigrohrs und des Drucks der Flüssigkeit eine Flüssigkeitssäule in dem Steigrohr ausbilden kann und keine Flüssigkeit durch die erste Öffnung in die Umgebung entweichen kann. Die Gasblasen können hingegen ungehindert durch die erste Öffnung und das Steigrohr die Flüssigkeit verlassen.

In einer weiteren bevorzugten Ausführung ist in dem Hohlraum oberhalb der Bodenplatte ein Rad mit einer Rotationsachse senkrecht zur Bodenplatte vorgesehen, wobei das Rad durch einen Flüssigkeitsstrom der Flüssigkeit gedreht werden kann. Dies hat den Vorteil, das Rad, das bevorzugt als Flügelrad ausgestaltet ist, sich durch den Flüssigkeitsstrom dreht und eventuell an der Innenwand des ersten Hohlbehälters anhaftenden Gasblasen löst, so dass diese dann nach oben durch die erste Öffnung entweichen können.

In einer weiteren bevorzugten Ausführung ist im Hohlraum oberhalb der Bodenplatte eine Kugel auf der Bodenplatte vorgesehen, wobei die Kugel durch einen Flüssigkeitsstrom der Flüssigkeit innerhalb des Hohlraums bewegt werden kann. Dies hat den Vorteil, dass die Kugel eventuell an der Innenwand des ersten Hohlbehälters anhaftenden Gasblasen löst, so dass diese dann nach oben durch die erste Öffnung entweichen können.

In einer weiteren bevorzugten Ausführung ist eine erste Trennwand in dem Hohlraum vorgesehen ist, wobei die erste Trennwand zwischen dem Einlass und dem Auslass angeordnet ist und eine Weglänge, die die Flüssigkeit wenigstens zwischen dem Einlass und dem Auslass in dem Hohlraum zurücklegen muss, vergrößert. Dies hat den Vorteil, dass dadurch die Flüssigkeit länger in dem ersten Hohlbehälter strömt und mehr Gasblasen zuverlässig entfernt werden können. Bevorzugt weist dabei der Innenraum des ersten Hohlbehälters dazu z.B. eine labyrinthförmige oder mäanderförmige Ausgestaltung auf.

In bevorzugter Ausgestaltung ist eine zweite Trennwand in dem Hohlraum vorgesehen, wobei die zweite Trennwand zwischen dem Einlass und dem Auslass angeordnet ist und wobei die Weglänge, die die Flüssigkeit wenigstens zwischen dem Einlass und dem Auslass in dem Hohlraum zurücklegen muss, weiter vergrößert wird und wobei bevorzugt die erste und die zweite Trennwand parallel zueinander angeordnet sind.

Bevorzugt sind die Trennwand oder die Trennwände ebene, senkrecht stehende Platten.

In bevorzugter Ausgestaltung ist die Trennwand oder die Trennwände in dem Hohlraum so angeordnet, dass die erste Öffnung in Verbindung zu allen Teilen des Hohlraums steht, die durch die Trennwand oder die Trennwände gebildet werden.

Bevorzugt verfügen die Oberflächen der Wandung des ersten Hohlbehälters, die zum Hohlraum hin orientiert sind, über hydrophile und/oder aerophobe Eigenschaften. Dies hat den Vorteil, dass Anhaften von Gasbläschen an der Innenwand des ersten Hohlbehälters reduziert wird.

Vorteilhafterweise wird die Flüssigkeit z.B. in einem Vorratsbehälter oder Tank erwärmt, z.B. mittels einer Heizvorrichtung, bevor die Flüssigkeit in den ersten Hohlbehälter strömt. Dies bewirkt, dass die Wirksamkeit der Vorrichtung weiter erhöht wird und mehr Gas bzw. Gasblasen aus der Flüssigkeit entfernt werden können.

Bevorzugt ist eine erfindungsgemäße Vorrichtung zur Reduzierung von Gasblasen in Flüssigkeiten für den Einsatz in einem automatischen Analysegerät geeignet.

Ein weiterer Gegenstand der Erfindung ist ein Analysegerät, welches eine vorgenannte erfindungsgemäße Vorrichtung zur Reduzierung von Gasblasen in Flüssigkeiten umfasst. Das Analysegerät umfasst weiter vorteilhafterweise bevorzugt einen automatischen Küvettengreifer und/oder einen automatischen Pipettor.

Ein weiterer Gegenstand der Erfindung ist die Verwendung einer erfindungsgemäßen Vorrichtung zur Reduzierung von Gasblasen in Flüssigkeiten in einem automatischen Analysegerät, wobei das automatische Analysegerät bevorzugt einen automatischen Küvettengreifer und/oder einen automatischen Pipettor umfasst.

Ein weiterer Gegenstand der Erfindung ist ein Verfahren zur Reduzierung von Gasblasen in einer Flüssigkeit in einem automatischem Analysegerät mittels einer erfindungsgemäßen Vorrichtung zur Reduzierung von Gasblasen in Flüssigkeiten, wobei die Flüssigkeit durch den Einlass in den Hohlraum geleitet wird und wobei die Flüssigkeit durch den Hohlraum vom Einlass zum Auslass strömt und wobei die Flüssigkeit den Hohlraum durch den Auslass verlässt und wobei sich in der Flüssigkeit befindende Gasblasen im Hohlraum aufsteigen und den Hohlraum durch die erste Öffnung verlassen.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations-oder Aktivitätsangabe dienen können. Unter einem qualitativen Nachweis ist der Nachweis des Vorhandenseins des Analyten in der Probe überhaupt oder das Anzeigen, dass die Menge,

Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann.

Die Begriffe "Messküvette" und "Küvette" werden synonym verwendet und bezeichnen den gleichen Gegenstand.

Die Begriffe "Analysegerät" und "Analyzer" werden vorliegend synonym verwendet und bezeichnen den gleichen Gegenstand.

Der Begriff "Gasblasenreduziervorrichtung" bezeichnet den gleichen Gegenstand wie eine "Vorrichtung zur Reduzierung von Gasblasen".

### Die Erfindung wird anhand von Zeichnungen exemplarisch näher erläutert. Darin zeigen:

FIG 1, 2, 3 und 4 schematisch den Aufbau einer Gasblasenreduziervorrichtung (1) umfassend einen ersten Holbehälter (3),
FIG 5, 6, 7 und 8 schematisch den Querschnitt verschiedener Ausgestaltungen einer Gasblasenreduziervorrichtung (1) mit unterschiedlich geformten Wandungen (6) des ersten Holbehälters (3),
FIG 9 schematisch den Aufbau eines ersten Holbehälters (3) mit leerem Hohlraum (4),
FIG 10 schematisch den Aufbau eines ersten Holbehälters (3) mit einem Rad (11) im Hohlraum (4),
FIG 11 schematisch den Aufbau eines ersten Holbehälters (3) mit einer Kugel (12) im Hohlraum (4),
FIG 12 schematisch den Aufbau eines ersten Holbehälters (3) mit einer ersten Trennwand (13) und einer zweiten Trennwand (14) im Hohlraum (4).

### Gleiche Teile sind in allen Figuren mit denselben Bezugszeichen versehen.

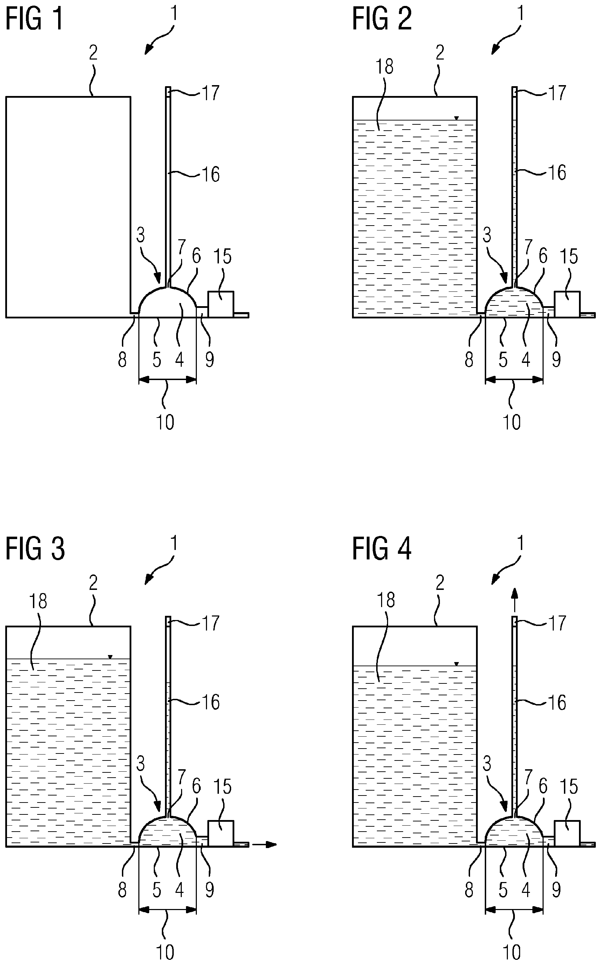

Die Gasblasenreduziervorrichtung (1) gemäß FIG 1 bis 4 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Die Gasblasenreduziervorrichtung (1) ist ausgestaltet zur Reduzierung von Gasblasen in einer Flüssigkeit (18) und umfasst einen Tank (2) für die Flüssigkeit (18), einen ersten Holbehälter (3) mit einem Einlass 8, einem Auslass 9, einer ersten Öffnung (7) und einer Wandung (6). Der erste Holbehälter (3) bildet einen Hohlraum (4) im Innern. Der Einlass (8) und Auslass (9) sind in einem ersten Abstand 10 angeordnet. Oberhalb der ersten Öffnung (7) befindet sich ein Steigrohr (16) mit einem Ventil (17). Bei dem Ventil handelt es sich um ein Überdruckventil. Das Steigrohr (16) ist mit einem ersten Ende an der ersten Öffnung (7) befestigt. Das Ventil (17) befindet sich an einem zweiten Ende des Steigrohrs (16). Die Gasblasenreduziervorrichtung (1) umfasst weiter eine Pumpe (15), die am Auslass (9) angeordnet ist. Bei der Pumpe (15) handelt es ich um eine Flüssigkeitspumpe. Der Einlass (8) ist mit dem Tank (2) verbunden.

Im leeren Zustand, siehe FIG 1, befinden sich in allen Komponenten Luft. Das System wird befüllt, indem der Tank (2) mit Flüssigkeit (18) gefüllt wird. In dem ersten Hohlbehälter (3), der als Blasenfalle fungiert, bzw. im Steigrohr (16) findet dann ein Niveaausgleich der Flüssigkeit (18) statt, d.h. der gleiche Druck und das gleiche Flüssigkeitsniveau wie im Tank (2) liegt auch im Steigrohr (16) an. Beim Ansteigen des Flüssigkeitsstandes im Steigrohr (16) wird die über der Flüssigkeitssäule liegende Luft komprimiert und es entsteht ein Überdruck im Steigrohr (16). Dieser Überdruck wird über das Ventil (17) automatisch abgelassen, so dass ein Druckausgleich stattfindet.

Wenn über die Pumpe (15) Flüssigkeit (18) angesaugt wird entsteht ein Unterdruck in dem ersten Hohlbehälter (3) und dem Steigrohr (16). Dabei ist der entstehende Unterdruck umso größer, je größer das Verhältnis des Strömungswiderstandes zwischen dem Einlass (8) und dem Auslass (9) ist. Je größer der entstehende Unterdruck ist, umso wirksamer werden Gasblasen aus der Flüssigkeit (18) entfernt. Die jeweiligen Strömungswiderstände des Auslasses (9) und des Einlasses (8) lassen sich dabei durch deren jeweilige Länge und Durchmesser sowie der jeweiligen Materialeigenschaften beeinflussen. Das Ventil (17) ist so ausgestaltet, dass es bei Unterdruck geschlossen bleibt und kein Druckausgleich stattfindet. Durch den Unterdruck in dem Steigrohr (16) und dem ersten Hohlbehälter (3) perlt Gas aus der Flüssigkeit (18) aus und bildet Gasblasen, die dann in dem Steigrohr (16) nach oben steigen.

In FIG 2 ist der Ausgangszustand mit flüssigkeitsgefülltem Tank (2) dargestellt. Die Pumpe (15) ist ausgeschaltet und es liegen gleiche Flüssigkeitsniveaus in Tank (15) und Steigrohr (16) an.

In FIG 3 ist die Pumpe (15) eingeschaltet. Flüssigkeit (18) wird schneller durch den Auslass (9) aus dem ersten Hohlbehälter (3) entnommen, als durch den Einlass (8) aus dem Tank (2) nachfließen kann. Es bildet sich ein Unterdruck in dem ersten Hohlbehälter (3) und dem Steigrohr (16) aus. Das Ventil (17) sperrt bei Unterdruck, so dass der Unterdruck erhalten bleibt, solange die Pumpe (15) in Betrieb ist. Durch den Unterdruck perlen Gasbläschen aus und steigen im Steigrohr (16) auf. Der Unterdruck ist dabei abhängig von der Höhe des Steigrohrs (16), der Pumpleistung der Pumpe (15) sowie des Verhältnisses der Strömungswiederstände von Einlass (8) und Auslass (9). Vorteilhafterweise ist das Steigrohr (16) so kurz wie möglich ausgestaltet, wobei es jedoch mindestens so lang sein muss, wie der höchste Flüssigkeitsstand im Tank (2).

In FIG 4 ist die Pumpe (15) wieder ausgeschaltet. Die Flüssigkeit (18) fließt durch den Einlass (8) aus dem Tank (2) in den ersten Hohlbehälter (3) und das Steigrohr (16) gemäß eines Systems von kommunizierenden Röhren. Im Steigrohr (16) entsteht ein Überdruck. Das Ventil (17) öffnet aufgrund des Überdrucks und erlaubt den Niveauausgleich im Steigrohr (16).

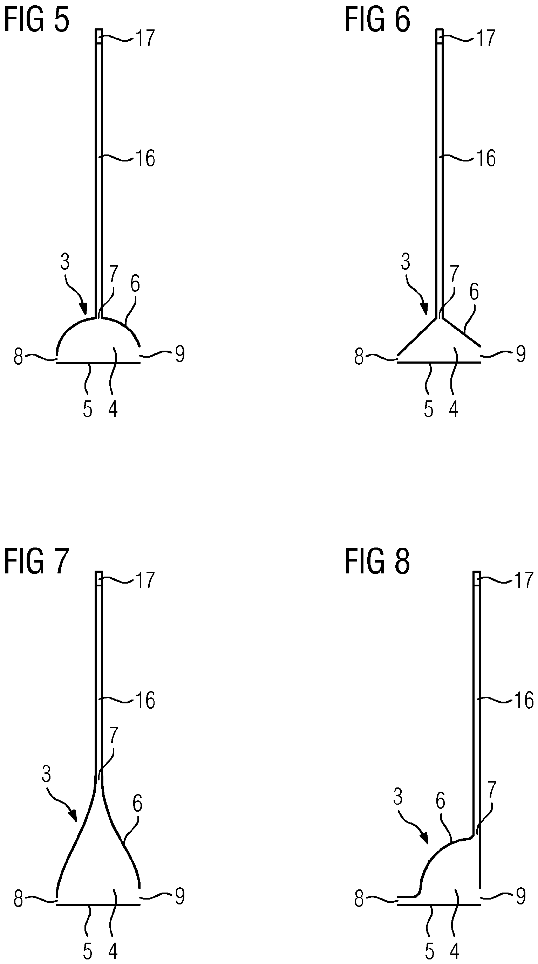

In FIG 5, 6, 7 und 8 ist schematisch der Querschnitt verschiedener Ausgestaltungen der Gasblasenreduziervorrichtung (1) mit unterschiedlich geformten Wandungen (6) des ersten Holbehälters (3) dargestellt. Die Verschiedenen Formen (FIG 5: Rundkuppelförmig, FIG 6: Kreiskegelmantelförmig, FIG 7: Zwiebeldachförmig, FIG 8: Spitzkuppelförmig) sind alle vorteilhafterweise rotationssymmetrisch um die lange Ache des Steigrohrs (16).

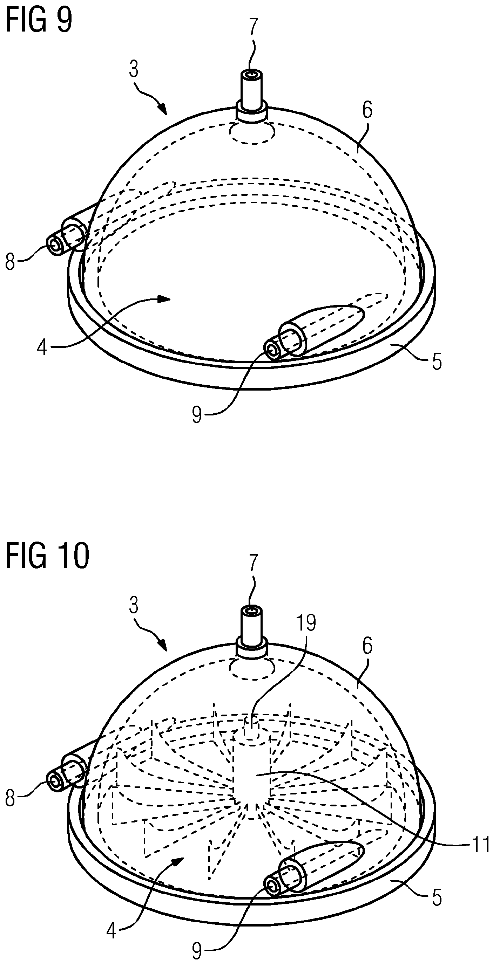

In FIG 9 ist schematisch der Aufbau eine ersten Ausführungsform eines ersten Holbehälters (3) mit leerem Hohlraum (4) dargestellt. Es handelt sich um einen besonders einfachen, funktionsfähigen Aufbau. Jedoch können Gasbläschen an der Innenwand der Wandung (6) des ersten Hohlbehälters (3) haften bleiben, die dann nicht ohne Weiteres zur ersten Öffnung (7) und ins Steigrohr (16) gelangen können.

In FIG 10 ist schematisch der Aufbau einer weiteren Ausführungsform des ersten Holbehälters (3) mit leerem Hohlraum (4) dargestellt. Der Aufbau entspricht der in FIG 9 dargestellten, jedoch ist zusätzlich ein Rad (11) mit einer Drehachse (19) vorgesehen, das sich in dem Hohlraum (4) befindet. Die Drehachse ist dabei senkrecht zu der Bodenplatte (5) ausgerichtet. Das Rad (11) ist als Flügelrad ausgestaltet und kann durch einen Flüssigkeitsstrom gedreht werden. Das Rad (5) löst dabei eventuell an der Innenwand der Wandung (6) anhaftende Gasblasen, so dass diese dann nach oben durch die erste Öffnung (7) entweichen können.

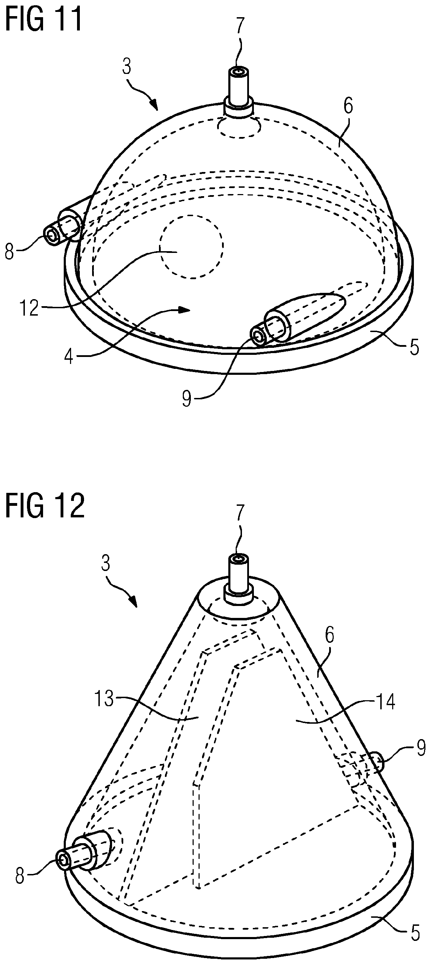

In FIG 11 ist schematisch der Aufbau einer weiteren Ausführungsform des ersten Holbehälters (3) mit leerem Hohlraum (4) dargestellt. Der Aufbau entspricht der in FIG 9 dargestellten, jedoch befindet sich eine Kugel (12) in dem Hohlraum (4). Die Kugel (4) kann durch einen Flüssigkeitsstrom innerhalb des Hohlraums (4) bewegt werde. Die Kugel (12) löst dabei eventuell an der Innenwand der Wandung (6) anhaftende Gasblasen, so dass diese dann nach oben durch die erste Öffnung (7) entweichen können.

In FIG 12 ist schematisch der Aufbau einer weiteren Ausführungsform des ersten Holbehälters (3) mit leerem Hohlraum (4) dargestellt. Der Aufbau ist der in FIG 9 dargestellten ähnlich, jedoch ist die Form der Wandung (6) nicht kuppelförmig, sondern in Form eines geraden Kreiskegelmantels ausgestaltet und es befindet sich eine erste Trennwand (13) und eine zweite Trennwand (14) in dem Hohlraum (4). Die Trennwände sind dabei so angeordnet, dass der direkte Weg zwischen Einlass (8) und Auslass (9) ähnlich wie in einem Labyrinth durch die Trennwände versperrt ist und Flüssigkeit entsprechend mäanderförmig durch den Hohlraum (4) hindurch strömen muss, um vom Einlass (8) zum Auslass (9) zu gelangen. Dies bewirkt, dass der effektive Abstand zwischen Einlass (8) und Auslass (9) stark vergrößert ist, was besonders effektiv erlaubt, Gasblasen aus der Flüssigkeit zu entfernen. Durch die Ausgestaltung der Trennwände ist weiter sichergestellt, dass nach oben aufsteigende Gasblasen den Hohlraum (4) durch die erste Öffnung (7) verlassen können, da die Trennwände im oberen Teil des ersten Hohlbehälters (3) unmittelbar unterhalb der ersten Öffnung (7) entsprechende Durchlässe freilassen.

### Bezugszeichenliste

- 1: Gasblasenreduziervorrichtung
- 2: Tank
- 3: erster Hohlbehälter
- 4: Hohlraum
- 5: Bodenplatte
- 6: Wandung
- 7: erste Öffnung
- 8: Einlass
- 9: Auslass
- 10: erster Abstand
- 11: Rad
- 12: Kugel
- 13: erste Trennwand
- 14: zweite Trennwand
- 15: Pumpe
- 16: Steigrohr
- 17: Ventil
- 18: Flüssigkeit
- 19: Drehachse

## Patentansprüche

1. Vorrichtung zur Reduzierung von Gasblasen in einer Flüssigkeit für ein automatisches Analysegerät, die Vorrichtung umfassend
einen ersten Hohlbehälter (3) mit einem Hohlraum (4), wobei der Hohlraum (4) von einer Bodenplatte (5) und einer mit der Bodenplatte (5) verbundenen Wandung (6) begrenzt ist,
wobei am höchsten Punkt der Wandung (6), der den größten Abstand von der Bodenplatte (5) aufweist, eine erste Öffnung (7) vorgesehen ist,
wobei der Hohlbehälter (3) oberhalb der Bodenplatte (5) einen Einlass (8) für einen ersten Flüssigkeitsstrom der Flüssigkeit und einen Auslass (9) für einen zweiten Flüssigkeitsstrom der Flüssigkeit in der Wandung (6) aufweist,
wobei der Einlass (8) und der Auslass (9) in einem ersten Abstand (10) zueinander angeordnet sind.

2. Vorrichtung nach Anspruch 1, wobei der erste Abstand (10) wenigstens einem halben Durchmesser des ersten Hohlbehälters (3) entspricht, bevorzugt dem gesamten Durchmesser.

3. Vorrichtung nach einem der vorhergehenden Ansprüche, wobei der Einlass (8) und/oder der Auslass (9) unmittelbar oberhalb der Bodenplatte (5) angeordnet sind.

4. Vorrichtung nach einem der vorhergehenden Ansprüche, wobei die Wandung (6) als kuppelförmige Wandung (6) ausgestaltet ist und der Hohlraum (4) kuppelförmig ist.

5. Vorrichtung nach einem der vorhergehenden Ansprüche, wobei die Bodenplatte (5) als Scheibe, bevorzugt als elliptische, besonders bevorzugt als Kreisscheibe ausgestaltet ist.

6. Vorrichtung nach einem der vorhergehenden Ansprüche, wobei an der ersten Öffnung (7) ein sich nach oben, von der Bodenplatte (5) entfernend ausdehnendes Steigrohr (16) vorgesehen ist.

7. Vorrichtung nach einem der vorhergehenden Ansprüche, wobei in dem Hohlraum (4) oberhalb der Bodenplatte (5) ein Rad (11) mit einer Rotationsachse (19) senkrecht zur Bodenplatte (5) vorgesehen ist, wobei das Rad (11) durch einen Flüssigkeitsstrom der Flüssigkeit gedreht werden kann.

8. Vorrichtung nach einem der vorhergehenden Ansprüche, wobei im Hohlraum (4) oberhalb der Bodenplatte (5) eine Kugel (12) auf der Bodenplatte (5) vorgesehen ist, wobei die Kugel (12) durch einen Flüssigkeitsstrom der Flüssigkeit innerhalb des Hohlraums (4) bewegt werden kann.

9. Vorrichtung nach einem der Ansprüche 1 bis 6, wobei eine erste Trennwand (13) in dem Hohlraum (4) vorgesehen ist, wobei die erste Trennwand (13) zwischen dem Einlass (8) und dem Auslass (9) angeordnet ist und eine Weglänge, die die Flüssigkeit wenigstens zwischen dem Einlass (8) und dem Auslass (9) in dem Hohlraum (4) zurücklegen muss, vergrößert.

10. Vorrichtung nach Anspruch 9, wobei eine zweite Trennwand (14) in dem Hohlraum (4) vorgesehen ist, wobei die zweite Trennwand (14) zwischen dem Einlass (8) und dem Auslass (9) angeordnet ist und wobei die Weglänge, die die Flüssigkeit wenigstens zwischen dem Einlass (8) und dem Auslass (9) in dem Hohlraum (4) zurücklegen muss, weiter vergrößert wird und wobei bevorzugt die erste (13) und die zweite Trennwand (14) parallel zueinander angeordnet sind.

11. Vorrichtung nach einem der Ansprüche 9 oder 10, wobei die Trennwand (13) oder die Trennwände (13, 14) ebene, senkrecht stehende Platten sind.

12. Vorrichtung nach einem der Ansprüche 9 bis 11, wobei die Trennwand (13) oder die Trennwände (13, 14) in dem Hohlraum (4) so angeordnet sind, dass die erste Öffnung (7) in Verbindung zu allen Teilen des Hohlraums (4) steht, die durch die Trennwand (13) oder die Trennwände (13, 14) gebildet werden.

13. Automatisches Analysegerät umfassend eine Vorrichtung nach einem der Ansprüche 1 bis 12, wobei das automatische Analysegerät bevorzugt einen automatischen Küvettengreifer und/oder einen automatischen Pipettor umfasst.

14. Verwendung einer Vorrichtung nach einem der Ansprüche 1 bis 12 in einem automatischen Analysegerät, wobei das automatische Analysegerät bevorzugt einen automatischen Küvettengreifer und/oder einen automatischen Pipettor umfasst.

15. Verfahren zur Reduzierung von Gasblasen in einer Flüssigkeit in einem automatischem Analysegerät mittels einer Vorrichtung nach einem der Ansprüche 1 bis 12, wobei die Flüssigkeit durch den Einlass (8) in den Hohlraum (4) geleitet wird und wobei die Flüssigkeit durch den Hohlraum (4) vom Einlass (8) zum Auslass (9) strömt und wobei die Flüssigkeit den Hohlraum (4) durch den Auslass (9) verlässt und wobei sich in der Flüssigkeit befindende Gasblasen im Hohlraum (4) aufsteigen und den Hohlraum (4) durch die erste Öffnung (7) verlassen.
